# EUROPEAN PATENT SPECIFICATION

(11) **EP 2 679 075 B1**
(45) Date of publication and mention of the grant of the patent: **11.06.2014**
(21) Application number: 12710537.7
(22) Date of filing: 20.02.2012
(51) Int. Cl.: H05B 3/34, A41D 13/005, B62J 33/00

(54) **APPLIANCE FOR SUPPLYING POWER TO HEATED ARTICLES OF CLOTHING**
GERÄT ZUR STROMVERSORGUNG VON BEHEIZTEN KLEIDUNGSSTÜCKEN
APPAREIL PERMETTANT DE FOURNIR DE L'ÉNERGIE À DES VÊTEMENTS CHAUFFÉS

(30) Priority: 21.02.2011 IT MO20110038
(43) Date of publication of application: 01.01.2014
(73) Proprietor: Simonazzi, Giuseppe, 42123 Reggio Emilia (IT)
(72) Inventor: Simonazzi, Giuseppe, 42123 Reggio Emilia (IT)
(74) Representative: Brunacci, Marco
(86) International application number: PCT/IB2012/000296
(87) International publication number: WO 2012/114179

(56) References cited:
- CN-U- 201 617 214
- CN-Y- 2 273 505
- DE-A1- 3 047 476
- DE-U1- 8 313 286
- DE-U1- 8 315 529
- JP-U- 53 152 734
- JP-U- 59 154 479

## Description

### Technical Field

The present invention relates to an appliance for supplying power to heated articles of clothing.

### Background Art

Heated articles of clothing are known, used in particular by the riders of motorcycles or like vehicles, suitable for heating one or more parts of the body in case of low outside temperatures.

Such articles of clothing can be jackets, under-jackets, gloves, trousers, pieces of footwear, etc., and generally comprise an internal power circuit having heating elements, such as resistances or the like, suitably arranged in correspondence to several points to heat different parts of the rider's body.

The supply of the power circuit can be implemented in different ways.

In particular, the power circuit can be supplied by a specific rechargeable battery positioned or positionable inside a housing on the article of clothing itself.

Alternatively, the power circuit can have specific cables to be connected to the battery of vehicle or, in the case of the vehicle being preset, specific connectors to be fitted in corresponding supply sockets on the vehicle itself.

These known heated articles of clothing, nevertheless, have a number of drawbacks.

In fact, in the event of a dedicated power battery being fitted, it is in any case necessary to perform repeated recharging operations of the battery itself. Furthermore, the battery has a limited autonomy which may not be enough to heat one or more articles of clothing during long journeys.

In the case of the power circuit having to be connected to the battery of the vehicle by means of specific cables or connectors, on the other hand, this requires the continual manual connection and disconnection of the circuit.

This operation can therefore prove inconvenient and troublesome for the rider, especially if he/she has to repeatedly get on/off the vehicle during a journey.

To this must be added the fact that the connection of the cables of the power circuit directly to the battery of the vehicle is not always simple and immediate and can require particular technical skills by whosoever performs the operation.

JP53152734 **and** JP59154479 **disclose electrical heated gloves, having the electric contact elements embedded therein for the connection with electrical contact elements provided on the grips of a motorcycle.**

DE8315529U**,** DE8313286**,** DE3047476 **disclose different embodiments of motorcycle heated gloves, which are made or an external covering part and an internal lining part, the latter including electrical contact means able to be connected with other electrical means placed at the motorcycle grips.**

CN2273505**,** CN201617214U **both disclose gloves having electrodes able_to contact electrical connecting means on the grips of a motorcycle, and also able to transmit current to windings arranged around the gloves themselves.**

### Description of the Invention

The main object of the present invention is to provide an appliance for supplying power to heated articles of clothing which allows the quick and easy connection and disconnection of a heated article of clothing to/from the power supply of a vehicle.

Another object of the present invention is to provide an appliance for supplying power to heated articles of clothing which allows overcoming the mentioned drawbacks of the state of the art within the ambit of a simple, rational as well as low cost solution.

The above objects arc achieved by the present appliance for supplying power to heated articles of clothing, comprising first electric connection means associated with the power supply of a vehicle and second electric connection means associated with at least a heating electric circuit of a heated article of clothing and associable with said first electric connection means, characterised in that said first electric connection means comprise at least a first and a second contact element defined in correspondence to two separate portions of said vehicle and associated with the positive pole and the negative pole respectively, of said power supply and in that said second electric connection means comprise at least a third and a fourth contact element defined in correspondence to two separate portions of said heated article of clothing and positionable in correspondence to said first and second contact element respectively, for the power connection of said heating electric circuit with said power supply.

### Brief Description of the Drawings

Other characteristics and advantages of the present invention will become more evident from the description of a preferred, but not sole, embodiment of an appliance for supplying power to heated articles of clothing, illustrated purely as an example but not limited to the annexed drawings in which:
Figure 1 shows an example of clothing comprising gloves having the second electric connection means of the appliance according to the invention;
Figure 2 partially shows a motor vehicle with the handlebar gripping portions
having the first electric connection means of the appliance according to the invention.

### Embodiments of the Invention

These figures show a preferred embodiment of the appliance for supplying power to heated articles of clothing according to the invention, described below, fitted to a traditional motor vehicle and to heated articles of clothing commonly used by motor bikers.

Different embodiments of the appliance cannot however be ruled out fitted to different vehicles and for different heated articles of clothing.

The appliance according to the invention, e.g., can be fitted to vehicles such as motorized sledges or to particular transport equipment such as ski-lifts or the like and, in any case, in any situation wherein the need arises to warm oneself. The appliance comprises a device installable on a motor vehicle and having first electric connection means 1 connected to the power supply 2 of a conventional motor vehicle 3, made up of a power battery of the type commonly installed on motor vehicles or the like.

The appliance also comprises second electric connection means 4 connected to the heating electric circuit 5 of heated articles of clothing and associable with the first electric connection means 1.

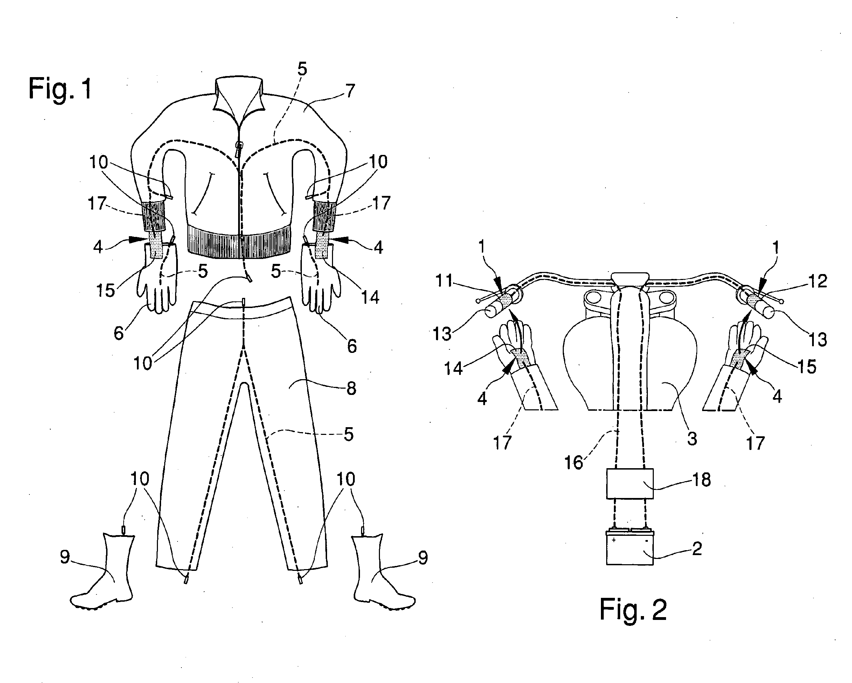

With particular reference to the figure 1, the heated articles of clothing comprise gloves 6, a jacket 7, trousers 8 and pieces of footwear 9.

The heating electric circuit 5 is of the type commonly used and comprises heating elements not shown in the illustration, of the type of electric resistances or the like, positioned in different parts of the articles of clothing.

The heating electric circuit 5 of each of the articles of clothing can be connected to that of the other articles of clothing by means of special electric connectors 10.

Advantageously, the first electric connection means 1 comprise a first contact element 11 and a second contact element 12 defined in correspondence to two distinct portions of the motor vehicle 3 and connected to the positive pole and to the negative pole respectively of the power battery 2 of the vehicle itself.

With particular reference to the embodiment of the appliance shown in the illustrations, the first and the second contact elements 11 and 12 are composed of suitable metal blades obtained along a portion of the gripping portions 13 of the motor vehicle 3 handlebars.

The second electric connection means 4 comprise a third contact element 14 and a fourth contact element 15 defined in correspondence to two distinct portions of one of the articles of clothing and positionable resting in correspondence to the first contact element 11 and to the second contact element 12 respectively for the power connection of the heating electric circuit 5 to the battery 2.

With particular reference to the embodiment of the appliance shown in the illustrations, the third and the fourth contact elements 14 and 15 are made in correspondence to the cuffs of a jacket 7 of the heated clothing.

In particular, both the third and the fourth contact elements 14 and 15 comprise a support element for supporting an electrically conductive portion of the type of a metal conductive blade or the like.

In particular, each of the support elements can be made preferably from a piece of cloth (flap), having one extremity fastened inside the cuffs of the jacket (7). Such strips of cloth are suitable for extending from the cuff and being positioned in correspondence to the palms of the hands of the vehicle rider, with the conductive blade towards the outside.

This way, when the rider, once the two strips of cloth have been extracted to position them in correspondence to the palms of the hands, climbs onto the motor vehicle and grips the gripping portions 13, the heating electric circuit 5 of each article of clothing is connected to the power battery 2 of the motor vehicle 3.

Different embodiments of the appliance cannot however be ruled out.

For example, the third and the fourth contact elements 14 and 15 can be made up of suitable metal blades obtained along a portion of the palm of the gloves 6.

This way, when the rider, once having put on the gloves 6, climbs onto the motor vehicle and grips the gripping portions 13, the heating electric circuit 5 of each article of clothing is connected to the power battery 2 of the motor vehicle 3.

Alternatively, the first and the second contact elements 11 and 12 can be made in correspondence to two resting portions for the feet of the rider of the motor vehicle, e.g., on the platform of a scooter or the like, while the third and the fourth contact elements 14 and 15 can be made in correspondence to the soles of the pieces of footwear 9 of the heated clothing.

The first electric connection means 1 also comprise a pair of first connection cables 16 between the first and the second contact elements 11 and 12 and the positive and negative poles of the battery 2.

The second electric connection means 1 also comprise a pair of second connection cables 17 suitable for connecting the third and the fourth contact elements 14 and 15 to the heating electric circuit 5 of the other heated articles of clothing.

Advantageously, the first electric connection means 1 also comprise an electronic supply circuit, generally indicated by the reference 18 in figure 2, placed between the battery 2 and the first and second contact elements 11 and 12, suitable for supplying a low initial current, at the time of the connection of the third and fourth contact elements 14 and 15 to the first and second contact elements 11 and 12.

The presence of the electronic supply circuit 18 permits avoiding, in particular, electric spark phenomena which would be troublesome for the rider of the motor vehicle 3.

Furthermore, the electronic supply circuit 18 can also have means for adjusting the average current to be supplied, so as to therefore allow regulating the temperature of the articles of clothing to be heated.

Such temperature regulation can be manual or automatic.

In particular, in the second case, the electronic supply circuit 18 can be operatively connected to a temperature probe suitably positioned inside the article of clothing itself, so as to maintain the required temperature difference with the outside environment.

It has been ascertained how the described invention achieves the intended objects.

In particular, the fact is underlined that the appliance according to the invention permits the quick and easy connection and disconnection of a heated article of clothing to/from the power supply of a vehicle.

## Claims

1. Appliance (1, 4) for the power supply of heated articles of clothing, comprising first electric connection means (1) associated with the power supply (2) of a vehicle (3) and second electric connection means (4) associated with at least a heating electric circuit (5) of at least a heated article of clothing (6, 7, 8, 9) and associable with said first electric connection means (1), wherein said first electric connection means (1) comprise at least a first and a second contact element (11, 12) defined in correspondence to two separate portions of said vehicle (3) and associated with the positive pole and the negative pole of said power supply (2) respectively, and wherein said second electric connection means (4) comprise at least a third and a fourth contact element (14, 15) defined in correspondence to two separate portions of said heated article of clothing (6, 7, 8, 9) and positionable in correspondence to said first and second contact element (11, 12) respectively, for the power connection of said heating electric circuit (5) with said power supply (2); the appliance (1, 4) being **characterized by** the fact that each of the third and the fourth contact element (14, 15) comprises at least a support element of said electrically conductive portion, having an extremity associated with a respective cuff of a jacket (7) of a heated article of clothing (6, 7, 8, 9), and being extendable from said cuff and positioned in correspondence to the palm of the hands of said vehicle rider.

2. Appliance (1, 4) as claimed in claim 1, **characterised in that** at least one between said first, second, third and fourth contact element (11, 12, 14, 15) comprises at least an electrically conductive portion.

3. Appliance (1, 4) as claimed in any of the preceding claims, **characterised in that** each of said first, second, third and fourth contact element (11, 12, 14, 15) comprises at least an electrically conductive portion, the electrically conductive portions of said third and fourth contact element (14, 15) being positionable in contact with the electrically conductive portions of said first and second contact element (11, 12) for the electric connection of said heating electric circuit (5) with said power supply (2).

4. Appliance (1, 4) as claimed in any of the preceding claims, **characterised in that** said first electric connection means (1) comprise at least a first connection cable (16) suitable for connecting at least one between said first and second contact element (11, 12) with said power supply of the vehicle (3).

5. Appliance (1, 4) as claimed in any of the preceding claims, **characterised in that** said second electric connection means (4) comprise at least a second connection cable (17) suitable for connecting at least one between said third and fourth contact element (14, 15) with said heating electric circuit (5) of said article of clothing.

6. Appliance (1, 4) as claimed in any of the preceding claims, **characterised in that** at least one between said first and second contact element (11, 12) is made in correspondence to the steering control of said vehicle (3).

7. Appliance (1, 4) as claimed in any of the preceding claims, **characterised in that** at least one between said third and fourth contact element (14, 15) is made in correspondence to at least one of the cuffs of a jacket (7) or the like of said heated article of clothing (6, 7, 8, 9).

8. Appliance (1, 4) as claimed in any of the preceding claims, **characterised in that** at least one between said third and fourth contact element (14, 15) is made in correspondence to a glove (6) of said heated article of clothing (6, 7, 8, 9).

9. Appliance (1, 4) as claimed in any of the preceding claims, **characterised in that** said first and second contact element (11, 12) are made in correspondence to separate gripping portions (13) of the steering control of said vehicle (3) and said third and fourth contact element (14, 15) are made in correspondence to separate gloves (6) of said heated article of clothing (6, 7, 8, 9).

10. Appliance (1, 4) as claimed in any of the preceding claims, **characterised in that** at least one between said first and second contact element (11, 12) is made in correspondence to a resting portion for the feet of the rider on said vehicle (3).

11. Appliance (1, 4) as claimed in any of the preceding claims, **characterised in that** at least one between said third and fourth contact element (14, 15) is made in correspondence to a piece of footwear (9) of said heated article of clothing (6, 7, 8, 9).

12. Appliance (1, 4) as claimed in any of the preceding claims, **characterised in that** said first and second contact element (11, 12) are made in correspondence to separate resting portions for the feet of the rider on said vehicle (3) and said third and fourth contact element (14, 15) are made in correspondence to separate pieces of footwear (9) of said heated article of clothing (6, 7, 8, 9).

13. Appliance (1, 4) as claimed in any of the preceding claims, **characterised in that** said first electric connection means (1) comprise at least an electronic supply circuit (18) associated with said power supply (2) and suitable for delivering an initial low voltage, when connecting the third and fourth contact element (14, 15) to the first and second contact element (11, 12).

14. Appliance (1, 4) as claimed in any of the preceding claims, **characterised in that** said first electric connection means (1) comprise at least a supply electronic circuit (18) associated with said power supply (2) and having means for adjusting the average current to be supplied, so as to adjust the temperature of said heated article of clothing (6, 7, 8, 9).

15. Heated article of clothing (6, 7, 8, 9) comprising at least a heating electric circuit (5) and second electric connection means (4) associated with said heating electric circuit (5) and associable with first electric connection means (1) associated with the power supply (2) of a vehicle (3), wherein said second electric connection means (4) comprise at least a third and fourth contact element (14, 15) defined in correspondence to two separate portions of said article of clothing and positionable in correspondence to a first and a second contact element (11, 12) respectively, of said first electric connection means (1), defined in correspondence to two separate portions of said vehicle (3), for the electric connection of said heating electric circuit (5) with said power supply (2); the clothing (6, 7, 8, 9) being **characterized by** the fact that each of the third and the fourth contact element (14, 15) comprises at least a support element of said electrically conductive portion, having an extremity associated with a respective cuff of a jacket (7) of a heated article of clothing (6, 7, 8, 9), and being extendable from said cuff and positioned in correspondence to the palm of the hands of said vehicle rider.

## Patentansprüche

1. Gerät (1, 4) zur Stromversorgung von beheizten Kleidungsstücken, umfassend erste elektrische Anschlussmittel (1), die der Stromversorgung (2) eines Fahrzeugs (3) zugeordnet sind, sowie zweite elektrische Anschlussmittel (4), die zumindest einem elektrischen Heizkreislauf (5) zumindest eines beheizten Kleidungsstücks (6, 7, 8, 9) zugeordnet sind und den ersten elektrischen Anschlussmitteln (1) zuordenbar sind, wobei die ersten elektrischen Anschlussmittel (1) zumindest ein erstes sowie ein zweites Kontaktelement (11, 12) umfassen, die entsprechend zweier separater Abschnitte des Fahrzeugs (3) ausgebildet und dem positiven Pol bzw. dem negativen Pol der Stromversorgung (2) zugeordnet sind, und wobei die zweiten elektrischen Anschlussmittel (4) zumindest ein drittes sowie ein viertes Kontaktelement (14, 15) umfassen, die entsprechend zweier separater Abschnitte des beheizten Kleidungsstücks (6, 7, 8, 9) ausgebildet und für den Netzanschluss des elektrischen Heizkreislaufs (5) an die Stromversorgung (2) relativ zum ersten bzw. zweiten Kontaktelement (11, 12) positionierbar sind, **dadurch gekennzeichnet, dass** das dritte und das vierte Kontaktelement (14, 15) jeweils zumindest ein Stützelement für den elektrisch leitenden Abschnitt umfasst, dessen eines Ende einer jeweiligen Manschette einer Jacke (7) eines beheizten Kleidungsstücks (6, 7, 8, 9) zugeordnet und von der Manschette aus wegziehbar ist, so dass es relativ zur Handfläche eines Fahrzeugführers positioniert werden kann.

2. Gerät (1, 4) gemäß Anspruch 1, **dadurch gekennzeichnet, dass** zumindest eines aus der Gruppe umfassend das erste, zweite, dritte und vierte Kontaktelement (11, 12, 13, 14) zumindest einen elektrisch leitenden Abschnitt umfasst.

3. Gerät (1, 4) gemäß einem der vorigen Ansprüche, **dadurch gekennzeichnet, dass** das erste, zweite, dritte und vierte Kontaktelement (11, 12, 13, 14) jeweils zumindest einen elektrisch leitenden Abschnitt umfasst, wobei die elektrisch leitenden Abschnitte des dritten und vierten Kontaktelementes (14, 15) zur Herstellung der elektrischen Verbindung zwischen dem elektrischen Heizkreislauf (5) und der Stromversorgung (2) in Kontakt mit den elektrisch leitenden Abschnitten des ersten und zweiten Kontaktelementes (11, 12) positionierbar sind.

4. Gerät (1, 4) gemäß einem der vorigen Ansprüche, **dadurch gekennzeichnet, dass** die ersten elektrischen Anschlussmittel (1) zumindest ein erstes Anschlusskabel (16) zur Verbindung zumindest eines aus der Gruppe umfassend das erste und zweite Kontaktelement (11, 12) mit der Stromversorgung des Fahrzeugs (3) umfassen.

5. Gerät (1, 4) gemäß einem der vorigen Ansprüche, **dadurch gekennzeichnet, dass** die zweiten elektrischen Anschlussmittel (4) zumindest ein zweites Anschlusskabel (17) zur Verbindung zumindest eines aus der Gruppe umfassend das dritte und vierte Kontaktelement (14, 15) mit dem elektrischen Heizkreislauf (5) des Kleidungsstücks umfassen.

6. Gerät (1, 4) gemäß einem der vorigen Ansprüche, **dadurch gekennzeichnet, dass** zumindest eines aus der Gruppe umfassend das erste und zweite Kontaktelement (11, 12) entsprechend der Lenksteuerung des Fahrzeugs (3) ausgeführt ist.

7. Gerät (1, 4) gemäß einem der vorigen Ansprüche, **dadurch gekennzeichnet, dass** zumindest eines aus der Gruppe umfassend das dritte und vierte Kontaktelement (14, 15) entsprechend zumindest einer der Manschetten einer Jacke (7) oder Ähnlichem der beheizten Kleidungsstücke (6, 7, 8, 9) ausgeführt ist.

8. Gerät (1, 4) gemäß einem der vorigen Ansprüche, **dadurch gekennzeichnet, dass** zumindest eines aus der Gruppe umfassend das dritte und vierte Kontaktelement (14, 15) entsprechend einem Handschuh (6) des beheizten Kleidungsstücks (6, 7, 8, 9) ausgeführt ist.

9. Gerät (1, 4) gemäß einem der vorigen Ansprüche, **dadurch gekennzeichnet, dass** das erste und zweite Kontaktelement (11, 12) entsprechend separater Greifabschnitte (13) der Lenksteuerung des Fahrzeugs (3) ausgeführt sind, und das dritte und vierte Kontaktelement (14, 15) entsprechend separater Handschuhe (6) des beheizten Kleidungsstücks (6, 7, 8, 9) ausgeführt sind.

10. Gerät (1, 4) gemäß einem der vorigen Ansprüche, **dadurch gekennzeichnet, dass** zumindest eines aus der Gruppe umfassend das erste und zweite Kontaktelement (11, 12) entsprechend einer Ablagefläche für die Füße des Führers des Fahrzeugs (3) ausgeführt ist.

11. Gerät (1, 4) gemäß einem der vorigen Ansprüche, **dadurch gekennzeichnet, dass** zumindest eines aus der Gruppe umfassend das dritte und vierte Kontaktelement (14, 15) entsprechend einem Teil einer Fußbekleidung (9) des beheizten Kleidungsstücks (6, 7, 8, 9) ausgeführt ist.

12. Gerät (1, 4) gemäß einem der vorigen Ansprüche, **dadurch gekennzeichnet, dass** das erste und zweite Kontaktelement (11, 12) entsprechend separater Abstellabschnitte für die Füße eines Führers des Fahrzeugs (3) ausgeführt sind, und das dritte und vierte Kontaktelement (14, 15) entsprechend separater Teile der Fußbekleidung (9) des beheizten Kleidungsstücks (6, 7, 8, 9) ausgeführt sind.

13. Gerät (1, 4) gemäß einem der vorigen Ansprüche, **dadurch gekennzeichnet, dass** die ersten elektrischen Anschlussmittel (1) zumindest einen der Stromversorgung (2) zugeordneten elektronischen Versorgungskreislauf (18) umfassen, der eine niedrige Anfangsspannung liefert, wenn das dritte und vierte Kontaktelement (14, 15) mit dem ersten und zweiten Kontaktelement (11, 12) verbunden werden.

14. Gerät (1, 4) gemäß einem der vorigen Ansprüche, **dadurch gekennzeichnet, dass** die ersten elektrischen Anschlussmittel (1) zumindest einen der Stromversorgung zugeordneten elektronischen Versorgungskreislauf (18) umfassen und Mittel zur Einstellung des durchschnittlichen Versorgungsstroms aufweisen, so dass die Temperatur des beheizten Kleidungsstücks (6, 7, 8, 9) eingestellt werden kann.

15. Beheiztes Kleidungsstück (6, 7, 8, 9) umfassend zumindest einen elektrischen Heizkreislauf (5) und zweite elektrische Anschlussmittel (4), die dem elektrischen Heizkreislauf (5) zugeordnet sind und ersten elektrischen Anschlussmitteln (1), die der Stromversorgung eines Fahrzeugs (3) zugeordnet sind, zuordenbar sind, wobei die zweiten elektrischen Anschlussmittel (4) zumindest ein drittes sowie ein viertes Kontaktelement (14, 15) umfassen, die entsprechend zweier separater Abschnitte des Kleidungsstücks ausgebildet und zur Herstellung eines elektrischen Anschlusses zwischen dem elektrischen Heizkreislauf (5) und der Stromversorgung (2) relativ zu einem ersten bzw. einem zweiten Kontaktelement (11, 12) der ersten elektrischen Anschlussmittel (1) positionierbar sind, wobei diese entsprechend zweier separater Abschnitte des Fahrzeugs (3) ausgebildet sind, **dadurch gekennzeichnet, dass** das dritte und vierte Kontaktelement (14, 15) jeweils zumindest ein Stützelement für den elektrisch leitenden Abschnitt umfassen, wobei dessen eines Ende einer jeweiligen Manschette einer Jacke (7) eines beheizten Kleidungsstücks (6, 7, 8, 9) zugeordnet ist und von der Manschette aus wegziehbar ist, so dass es relativ zur Handfläche des Fahrzeugsführers positioniert werden kann.

## Revendications

1. Appareil (1, 4) pour la fourniture d'énergie à des vêtements chauffés, comprenant des premiers moyens de connexion électrique (1) associés au système d'alimentation (2) d'un véhicule (3) et des deuxièmes moyens de connexion électrique (4) associés à au moins un circuit électrique (5) de chauffage d'au moins un vêtement chauffé (6, 7, 8, 9) et pouvant être associés auxdits premiers moyens de connexion électrique (1), dans lequel lesdits premiers moyens de connexion électrique (1) comprennent au moins un premier et un deuxième élément de contact (11, 12) définis en correspondance avec deux parties distinctes dudit véhicule (3) et associés respectivement au pôle positif et au pôle négatif dudit système d'alimentation (2), et dans lequel lesdits deuxièmes moyens de connexion électrique (4) comprennent au moins un troisième et un quatrième élément de contact (14, 15) définis en correspondance avec deux parties distinctes dudit vêtement chauffé (6, 7, 8, 9) et pouvant être placés en correspondance avec lesdits premier et deuxième éléments de contact (11, 12) respectivement, pour la connexion d'alimentation dudit circuit électrique de chauffage (5) avec ledit système d'alimentation (2) ; l'appareil (1, 4) étant **caractérisé par le fait que** chacun des troisième et quatrième éléments de contact (14, 15) comprend au moins un élément de support de ladite partie électriquement conductrice, comportant une extrémité associée à un poignet respectif d'une veste (7) d'un vêtement chauffé (6, 7, 8, 9), et pouvant être étiré par rapport audit poignet et placé en correspondance avec la paume des mains du conducteur dudit véhicule.

2. Appareil (1, 4) tel que revendiqué dans la revendication 1, **caractérisé en ce qu'**au moins un élément parmi lesdits premier, deuxième, troisième et quatrième éléments de contact (11, 12, 14, 15) comprend au moins une partie électriquement conductrice.

3. Appareil (1, 4) tel que revendiqué dans l'une quelconque des revendications précédentes, **caractérisé en ce que** chacun desdits premier, deuxième, troisième et quatrième éléments de contact (11, 12, 14, 15) comprend au moins une partie électriquement conductrice, les parties électriquement conductrices desdits troisième et quatrième éléments de contact (14, 15) pouvant être placées au contact des parties électriquement conductrices desdits premier et deuxième éléments de contact (11, 12) pour la connexion électrique dudit circuit électrique de chauffage (5) avec ledit système d'alimentation (2).

4. Appareil (1, 4) tel que revendiqué dans l'une quelconque des revendications précédentes, **caractérisé en ce que** lesdits premiers moyens de connexion électrique (1) comprennent au moins un premier câble de connexion (16) apte à connecter au moins l'un parmi lesdits premier et deuxième éléments de contact (11, 12) audit système d'alimentation du véhicule (3).

5. Appareil (1, 4) tel que revendiqué dans l'une quelconque des revendications précédentes, **caractérisé en ce que** lesdits deuxièmes moyens de connexion électrique (4) comprennent au moins un deuxième câble de connexion (17) apte à connecter au moins l'un parmi lesdits troisième et quatrième éléments de contact (14, 15) audit circuit électrique de chauffage (5) dudit vêtement.

6. Appareil (1, 4) tel que revendiqué dans l'une quelconque des revendications précédentes, **caractérisé en ce qu'**au moins l'un parmi lesdits premier et deuxième éléments de contact (11, 12) est réalisé en correspondance avec la commande de direction dudit véhicule (3).

7. Appareil (1, 4) tel que revendiqué dans l'une quelconque des revendications précédentes, **caractérisé en ce qu'**au moins l'un parmi lesdits troisième et quatrième éléments de contact (14, 15) est réalisé en correspondance avec au moins l'un des poignets d'une veste (7) ou similaire dudit vêtement chauffé (6, 7, 8, 9).

8. Appareil (1, 4) tel que revendiqué dans l'une quelconque des revendications précédentes, **caractérisé en ce qu'**au moins l'un parmi lesdits troisième et quatrième éléments de contact (14, 15) est réalisé en correspondance avec un gant (6) dudit vêtement chauffé (6, 7, 8, 9).

9. Appareil (1, 4) tel que revendiqué dans l'une quelconque des revendications précédentes, **caractérisé en ce que** lesdits premier et deuxième éléments de contact (11, 12) sont réalisés en correspondance avec des parties de préhension (13) distinctes de la commande de direction dudit véhicule (3) et lesdits troisième et quatrième éléments de contact (14, 15) sont réalisés en correspondance avec des gants distincts (6) distincts dudit vêtement chauffé (6, 7, 8, 9).

10. Appareil (1, 4) tel que revendiqué dans l'une quelconque des revendications précédentes, **caractérisé en ce qu'**au moins l'un parmi lesdits premier et deuxième éléments de contact (11, 12) est réalisé en correspondance avec une partie d'appui pour les pieds du conducteur sur ledit véhicule (3).

11. Appareil (1, 4) tel que revendiqué dans l'une quelconque des revendications précédentes, **caractérisé en ce qu'**au moins l'un parmi lesdits troisième et quatrième éléments de contact (14, 15) est réalisé en correspondance avec un élément chaussant (9) dudit vêtement chauffé (6, 7, 8, 9).

12. Appareil (1, 4) tel que revendiqué dans l'une quelconque des revendications précédentes, **caractérisé en ce que** lesdits premier et deuxième éléments de contact (11, 12) sont réalisés en correspondance avec des parties d'appui distinctes pour les pieds du conducteur sur ledit véhicule (3) et lesdits troisième et quatrième éléments de contact (14, 15) sont réalisés en correspondance avec des éléments chaussants distincts (9) distinctes dudit vêtement chauffé (6, 7, 8, 9).

13. Appareil (1, 4) tel que revendiqué dans l'une quelconque des revendications précédentes, **caractérisé en ce que** lesdits premiers moyens de connexion électrique (1) comprennent au moins un circuit d'alimentation électronique (18) associé audit système d'alimentation (2) et apte à fournir une tension initiale faible, lors de la connexion des troisième et quatrième éléments de contact (14, 15) aux premier et deuxième éléments de contact (11, 12).

14. Appareil (1, 4) tel que revendiqué dans l'une quelconque des revendications précédentes, **caractérisé en ce que** lesdits premiers moyens de connexion électrique (1) comprennent au moins un circuit d'alimentation électronique (18) associé audit système d'alimentation (2) et comportant des moyens pour ajuster le courant moyen devant être fourni, afin d'ajuster la température dudit vêtement chauffé (6, 7, 8, 9).

15. Vêtement chauffé (6, 7, 8, 9) comprenant au moins un circuit électrique de chauffage (5) et des deuxièmes moyens de connexion électrique (4) associés audit circuit électrique de chauffage (5) et pouvant être associés à des premiers moyens de connexion électrique (1) associés au système d'alimentation (2) d'un véhicule (3), dans lequel lesdits deuxièmes moyens de connexion électrique (4) comprennent au moins un troisième et un quatrième élément de contact (14, 15) définis en correspondance avec deux parties distinctes dudit vêtement et pouvant être placés en correspondance avec respectivement un premier et un deuxième élément de contact (11, 12) desdits premiers moyens de connexion électrique (1), définis en correspondance avec deux parties distinctes dudit véhicule (3), pour la connexion électrique dudit circuit électrique de chauffage (5) audit système d'alimentation (2) ; le vêtement (6, 7, 8, 9) étant **caractérisé par le fait que** chacun des troisième et quatrième éléments de contact (14, 15) comprend au moins un élément de support de ladite partie électriquement conductrice, comportant une extrémité associée à un poignet respectif d'une veste (7) du vêtement chauffé (6, 7, 8, 9), et pouvant être étiré par rapport audit poignet et placé en correspondance avec la paume des mains du conducteur dudit véhicule.
